# EUROPÄISCHE PATENTANMELDUNG

(11) **EP 4 414 799 A1**
(43) Veröffentlichungstag der Anmeldung: **14.08.2024**
(21) Anmeldenummer: 23155407.2
(22) Anmeldetag: 07.02.2023
(51) Int. Cl.: G05B 19/418, H04L 67/52, H04W 4/024

(54) **NAVIGATION EINES OPERATORS INNERHALB EINER TECHNISCHEN ANLAGE**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)
(74) Vertreter: Siemens Patent Attorneys

(57) **Zusammenfassung**

Vorgeschlagen wird ein Verfahren zur Navigation eines Operators (19) innerhalb einer technischen Anlage (18), umfassend:
a) Erfassen eines Identifikationsmerkmals einer ersten Komponente (21) durch den Operator (19) und Übertragen des Identifikationsmerkmals an einen Operator Station Server (2) eines Leitsystems (1) der technischen Anlage (18),
b) Für den Fall, dass für die erste Komponente (21) im Rahmen einer Projektierung einer Automatisierung der technischen Anlage (18) ein Alarm mit einer Lokalisierungsinformation der ersten Komponente (21) zugewiesen worden ist, Ermitteln einer zu einem aktuellen Zeitpunkt ersten Position des Operators (19) anhand der Lokalisierungsinformation durch den Operator Station Server (2),
c) Vorgeben einer zweiten, alarmgebenden Komponente (20) mit einem zu dem aktuellen Zeitpunkt aktiven Alarm als Ziel der Navigation durch den Operator (19) und Übertragen des Ziels an den Operator Station Server (2),
d) Ermitteln einer zweiten Position der zweiten, alarmgebenden Komponente (20) anhand einer Lokalisierungsinformation des zu dem aktuellen Zeitpunkt aktiven Alarms der zweiten, alarmgebenden Komponente (20) durch den Operator Station Server (2),
e) Erzeugen von Navigationsinformationen durch Ermitteln einer Differenz zwischen der zweiten Position und der ersten Position durch den Operator Station Server (2),
f) Visuelle Darbietung der Navigationsinformationen an den Operator (19), um eine Navigation des Operators (19) zu der zweiten, alarmgebenden Komponente (20) zu ermöglichen.

## Beschreibung

Die Erfindung betrifft ein Leitsystem für eine technische Anlage, insbesondere Fertigungs- oder Prozessanlage. Außerdem betrifft die Erfindung eine Verwendung eines Leitsystems zum Betrieb einer technischen Anlage.

Moderne Anforderungen nach mehr Flexibilität und Skalierbarkeit von verfahrenstechnischen Anlagen führen dazu, dass Anlagenteile als kleine Einheiten separat entwickelt werden - so genannte *"*Package Units*"* oder *"*technische Module*"*. Ganze verfahrenstechnische Anlagen entstehen dann durch die Kombination einzelner Package Units. Um die Abläufe zwischen den einzelnen Package Units aussteuern - orchestrieren - zu können, kommen beispielsweise Batch System auf Operator Station Servern zum Einsatz.

Neben der Modularität bei der Entwicklung von Package Units bieten diese auch im Hinblick auf die Dynamik einer verfahrenstechnischen Anlage Vorteile - wenn beispielsweise nach der Produktion einer Charge die Anlage für die Produktion einer anderen Charge neu organisiert wird (Reallokation).

Eine Package Unit ist ein modularer Anlagenteil, der in einem zentralen Engineering als eine abgeschlossene Einheit integriert werden kann. Package Units sind umfangreicher als Messstellen oder technische Einrichtungen. Manchmal ist eine Package Unit gar eine ganze Teilanlage mit einer kompletten verfahrenstechnischen Struktur, die mehrere technische Einrichtungen (z.B. Tanks) umfasst, die wiederum mehrere Messstellen (z.B. Ventile, Monitore, Regler, Motoren...) beinhalten.

In modernen Anlagen und insbesondere in modernen modularen Anlagen werden die einzelnen Anlagenteile und insbesondere Module / Package Units häufig (beispielsweise innerhalb einer Anlage) bewegt. Die Lokalisierung der Package Units erweist sich unter diesen Randbedingungen als sehr aufwendig. Es gibt aktuell keine geeigneten Werkzeuge / Tools, um den geänderten Ort einer Package Unit zeitnah, effizient, zuverlässig und sicher im Hinblick auf die Cyber Security zu lokalisieren. Eine vergleichbare Problematik besteht auch für festverbaute verfahrenstechnische Anlagenteile.

In der DE 10 2015 202 792 A1 ist ein Verfahren zum Lokalisieren einer mobilen Einrichtung in einer Produktionsanlage offenbart.

Die WO 2013/083144 A1 offenbart ein Verfahren zum Betreiben einer Produktionsanlage mit einer Mehrzahl von Arbeitsstationen sowie einer Transporteinrichtung zum Transportieren von Gütern zwischen den Arbeitsstationen, welche eine Mehrzahl fahrerloser Flurförderzeuge umfasst, die sich auf jeweils vorgegebenen Pfaden zwischen zugeordneten Arbeitsstationen bewegen.

Der Erfindung liegt daher die Aufgabe zugrunde, ein Navigationsverfahren und ein Leitsystem für eine technische Anlage anzugeben, welche ein effizienteres Alarmmanagement in einer technischen Anlage ermöglichen.

Diese Aufgabe wird gelöst durch ein Verfahren zur Navigation eines Operators innerhalb einer technischen Anlage mit den Merkmalen des Anspruchs 1. Zudem wird die Aufgabe gelöst durch ein Leitsystem für eine technische Anlage mit den Merkmalen des Anspruchs 9. Weiterhin wird die Aufgabe gelöst durch eine technische Anlage mit den Merkmalen des Anspruchs 11. Außerdem wird die Aufgabe gelöst durch eine Verwendung eines Leitsystems zum Betrieb einer technischen Anlage gemäß Anspruch 13. Vorteilhafte Weiterbildungen ergeben sich aus den abhängigen Ansprüchen.

Das erfindungsgemäße Verfahren zur Navigation eines Operators innerhalb einer technischen Anlage umfasst die folgenden Verfahrensschritte:
a) Erfassen eines Identifikationsmerkmals einer ersten Komponente durch den Operator und Übertragen des Identifikationsmerkmals an einen Operator Station Server eines Leitsystems der technischen Anlage,
b) Für den Fall, dass für die erste Komponente im Rahmen einer Projektierung einer Automatisierung der technischen Anlage ein Alarm mit einer Lokalisierungsinformation der ersten Komponente zugewiesen worden ist, Ermitteln einer zu einem aktuellen Zeitpunkt ersten Position des Operators anhand der Lokalisierungsinformation durch den Operator Station Server,
c) Vorgeben einer zweiten, alarmgebenden Komponente mit einem zu dem aktuellen Zeitpunkt aktiven Alarm als Ziel der Navigation durch den Operator und Übertragen des Ziels an den Operator Station Server,
d) Ermitteln einer zweiten Position der zweiten, alarmgebenden Komponente anhand einer Lokalisierungsinformation des zu dem aktuellen Zeitpunkt aktiven Alarms der zweiten, alarmgebenden Komponente durch den Operator Station Server,
e) Erzeugen von Navigationsinformationen durch Ermitteln einer Differenz zwischen der zweiten Position und der ersten Position durch den Operator Station Server,
f) Visuelle Darbietung der Navigationsinformationen an den Operator, um eine Navigation des Operators zu der zweiten, alarmgebenden Komponente zu ermöglichen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Unter einem *"*Operator Station Server*"* wird vorliegend ein Server verstanden, der zentral Daten eines Bedien- und Beobachtungssystems sowie in der Regel Alarm- und Messwertarchive eines Prozessleitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Im Rahmen des erfindungsgemäßen Verfahrens wird zunächst ein Identifikationsmerkmal einer ersten Komponente durch den Operator erfasst. Die erste Komponente kann dabei ein beliebiges Gerät, eine Rohrleitung, ein Gebäudeteil oder dergleichen sein, welcher über ein Identifikationsmerkmal verfügt, welches der Operator zur Identifikation der ersten Komponente an den Operator Station Server weiterleiten kann. Das Erfassen des Identifikationsmerkmals kann dabei durch eine manuelle Eingabe durch den Operator oder durch eine bildliche Erfassung, insbesondere eines Anlagenkennzeichens, vorgenommen werden, vorzugsweise unter Nutzung eines Smartphones, Tablets, Notebooks oder einer Datenbrille zur Darstellung einer erweiterten Realität. Derartige Identifikationsmerkmale, insbesondere Anlagenkennzeichen, sind in technischen Anlage etabliert und für den Operator in der Regel einfach auffindbar.

Mit anderen Worten begibt sich der Operator beim Start der Navigation durch die technische Anlage zu der ersten Komponente und erfasst das Identifikationsmerkmal (durch manuelle Eingabe, Abfotografieren etc.). Das Identifikationsmerkmal wird danach an den Operator Station Server übertragen, welcher innerhalb der technischen Anlage befindlich sein kann, aber nicht muss. Die Datenübertragung kann auf eine beliebige Art und Weise erfolgen. Bevorzugt erfolgt das Übertragen des Identifikationsmerkmals an den Operator Station Server des Leitsystems kabellos, um dem Operator eine hohe Flexibilität beim Navigieren zu ermöglichen.

Wenn der ersten Komponente im Rahmen einer Projektierung einer Automatisierung der technischen Anlage ein Alarm mit einer Lokalisierungsinformation der ersten Komponente zugewiesen worden ist, wird diese Lokalisierungsinformation auf besonders vorteilhafte Art und Weise von dem Operator Station Server dazu verwendet, die zu einem aktuellen Zeitpunkt erste Position des Operators zu ermitteln. Anhand des Identifikationsmerkmals und dem in der Projektierung, welche dem Operator Station Server zugänglich ist, enthaltenen, zu der ersten Komponente gehörigen Alarm mit einer Lokalisierungsinformation der ersten Komponente, ermittelt der Operator Station Server automatisiert die aktuelle, erste Position des Operators.

Fällt nun ein Alarm einer zweiten, alarmgebenden Komponente der technischen Anlage an, gibt der Operator die zweite, alarmgebende Komponente als Ziel für die Navigation an. Dies kann allein auf Initiative des Operators erfolgen. Der Operator Station Server (oder mit dem Operator Station Server verbundene Analyse-/Überwachungssysteme) kann dem Operator aber auch auf den Alarm der zweiten, alarmgebenden Komponente hin einen Vorschlag für eine Navigation zu der zweiten, alarmgebenden Komponente unterbreiten. Wenn der Operator den Vorschlag annimmt, kann der Operator Station Server mit den nachfolgend beschriebenen Verfahrensschritten fortfahren.

Bekommt der Operator Station Server vom Operator die zweite, alarmgebende Komponente als Ziel der Navigation vorgegeben, ermittelt der Operator Station Server eine zweite Position der zweiten, alarmgebenden Komponente anhand einer Lokalisierungsinformation des zu dem aktuellen Zeitpunkt aktiven Alarms der zweiten, alarmgebenden Komponente. Dies bedeutet, dass für den zweiten (aktiven) Alarm analog zu dem Alarm für die erste Komponente in der Projektierung der Automatisierung der technischen Anlage eine Lokalisierungsinformation hinterlegt worden ist. Diese Lokalisierungsinformation kann initial beim Erstellen der Projektierung der Automatisierung für die technische Anlage vorgegeben worden sein. Sie kann aber während des Betriebs der technischen Anlage aufgrund eines Ortswechsels der zweiten, alarmgebenden Komponente auch geändert worden sein.

Aus einer Differenz zwischen der ersten und der zweiten Position ermittelt der Operator Station Server daraufhin die Navigationsinformationen. Diese können beispielsweise in einem xyz-Format mit einer Länge x in Metern, einer Breite y in Metern und einer Höhe z in Metern vorliegen. Die Navigationsinformationen werden dem Operator visuell dargeboten. Dies kann beispielsweise in Form von Navigationspfeilen bzw. - anweisungen erfolgen, die dem Operator auf einem Smartphone, einem Tablett oder in einer erweiterten Realität (AR-Brille) dargeboten werden.

Das erfindungsgemäße Verfahren ermöglicht es dem Operator, beim Auftreten eines Alarms schnell und zielgerichtet zu der alarmgebenden Komponente innerhalb der technischen Anlage zu navigieren.

Während der Navigation zu der alarmgebenden, zweiten Komponente kann ein Identifikationsmerkmal wenigstens einer dritten Komponente erfasst und die Schritte a bis f, wie zuvor erläutert, für wenigstens die dritte Komponente durchgeführt werden. Durch die Hinzunahme weiterer Identifikationsmerkmale und der damit verbundenen zusätzlichen Lokalisierungsinformationen kann die Genauigkeit der Navigation erhöht werden. Für die Erzeugung der Navigation kann der Operator Station Server zusätzlich noch Informationen über eine Infrastruktur der technischen Anlage hinzuziehen, insbesondere ein Rohrleitungs- und Instrumentierungsfließschema oder ein dreidimensionales Modell der technischen Anlage. Dadurch kann die Navigation zielgerichteter erfolgen, indem beispielsweise etwaige Hindernisse, Wände oder Bereiche berücksichtigt werden.

Die Navigation kann bevorzugt auch etwaige Berechtigungen des Operators berücksichtigen. Dadurch können im Rahmen der Navigation einzelne Bereiche der technischen Anlage ausgespart werden, zu denen der Operator gegebenenfalls keine Zutrittsberechtigung hat.

Wie zuvor erläutert, kann die Lokalisierungsinformation der zweiten, alarmgebenden Komponente im Rahmen einer Projektierung der Automatisierung der technischen Anlage vorgegeben oder vor dem aktuellen Zeitpunkt zur Laufzeit der technischen Anlage im Rahmen eines Positionswechsels der zweiten, alarmgebenden Komponente geändert worden sein. Um sicherzustellen, dass die zweite, alarmgebende Komponente sich auch tatsächlich an der neuen, zweiten Position befindet, kann die zweite, alarmgebende Komponente im Rahmen des Positionswechsels gegenüber einer Sicherheitsinstanz der technischen Anlage einen positionsgebundenen Nachweis ihrer Identität erbringen.

Wenn die alarmgebende, zweite Komponente zuvor an einem ersten Ort ausgebaut und an einem anderen, zweiten Ort (beispielsweise in einem anderen Bereich der Anlage) installiert wird, kann eine Registrierung der zweiten Komponente (in Form einer sicheren Provisionierung/ eines sicheren Onboarding) am neuen zweiten Ort angestoßen und anschließend durchgeführt werden. Dabei kann die zweite Komponente einen Beweis ihrer Identität gegenüber der Sicherheitsinstanz der technischen Anlage erbringen. Im Kontext der sicheren Provisionierung bzw. des sicheren Onboardings (z.B. in der BRSKI-ANIMA Spezifikation oder in der OPC UA Part 21-Spezifikation) wird eine solche Sicherheitsinstanz als Registrar bezeichnet.

Vorteilhafterweise kann bei dieser erneuten Registrierung der zweiten Komponente nicht eine initiale sichere Identität (die in der Regel nach IEEE 802.1AR als IDevID bezeichnet wird und aus einem herstellerspezifischen IDevID-Zertifikat, einer zugehörigen Certificate Chain und einem zugehörigen Private Key/Secret besteht) genutzt werden. Anstelle des IDevID-Zertifikats kann eine im Rahmen der zuletzt an dem ersten Ort erfolgten Registrierung *"*ausgerollte*"*, lokale, sichere Identität (die auch als LDevID-Generic bezeichnet wird und ein einbauortspezifisches LDevID-Generic-Zertifikat, eine zugehörigen Zertifikatskette und einen dazugehörigen privaten Schlüssel umfasst) im Rahmen der Registrierung / des Secure Device Onboardings zum Beweis der Identität der zweiten Komponente gegenüber der Sicherheitsinstanz verwendet werden. Als Ergebnis der erfolgreichen Registrierung wird dabei eine einbauortspezifische Identität auf die zweite Komponente ausgerollt. Wird der neue Einbauort (der zweite Ort) beispielsweise als Einbauort_2 bezeichnet, dann kann die o.g. einbauortspezifische sichere Identität beispielsweise als LDevID-Generic Einbauort_2 bezeichnet werden. Es wird dabei demnach eine lokale (einbauortspezifische) sichere Identität LDevID-Generic Einbauort_2 - nicht basierend auf einer initialen (herstellerspezifischen) sicheren Identität, sondern basierend auf einer vorhergehenden (einbauortspezifischen) sicheren Identität LDevID-Generic Einbauort_1, ausgerollt.

Die zuvor formulierte Aufgabe wird zudem gelöst durch ein Leitsystem für eine technische Anlage, insbesondere Fertigungs- oder Prozessanlage, welche technische Anlage wenigstens eine erste Komponente und eine zweite Komponente umfasst, wobei das Leitsystem wenigstens einen Operator Station Server umfasst, der dazu ausgebildet ist, ein Verfahren gemäß einem der vorangegangenen Ansprüche durchzuführen.

Das Leitsystem kann zusätzlich wenigstens einen Operator Station Client aufweisen, welcher von dem Operator für die Navigation verwendbar ist, wobei der Operator Station Server dazu ausgebildet ist, Visualisierungsinformationen zu erzeugen und an den Operator Station Client zu übertragen, welche Visualisierungsinformationen wenigstens den Alarm der zweiten, alarmgebenden Komponente umfassen.

Die zuvor formulierte Aufgabe wird zudem gelöst durch eine technische Anlage, insbesondere Fertigungs- oder Prozessanlage, die ein Leitsystem wie zuvor erläutert und wenigstens eine erste Komponente und eine zweite Komponente aufweist, wobei die zweite Komponente vorzugsweise eine Mehrzahl von Subkomponenten aufweist.

Die technische Anlage weist bevorzugt eine Sicherheitsinstanz auf, insbesondere eine Zertifizierungsstelle und/oder eine Registrierungsstelle im Rahmen einer Public-Private-Key Infrastruktur.

Die zuvor formulierte Aufgabe wird zudem gelöst durch die Verwendung eines Leitsystems wie zuvor erläutert zum Betrieb einer technischen Anlage, insbesondere Fertigungs- oder Prozessanlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: ein erfindungsgemäßes Leitsystem in einer schematischen Darstellung;
- FIG 2: eine Meldefolgeanzeige eines erfindungsgemäßen Leitsystems; und
- FIG 3: eine beispielhafte Navigation durch eine technische Anlage.

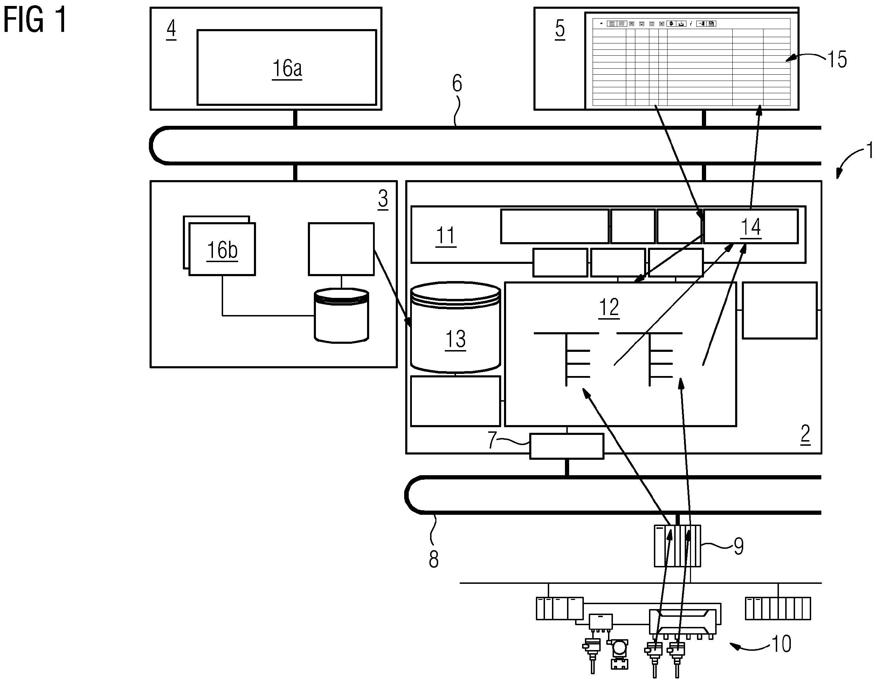

In FIG 1 ist ein Leitsystem 1 für die Bedienung und Beobachtung einer als Prozessanlage ausgebildeten technischen Anlage schematisch dargestellt. Das Leitsystem 1 umfasst einen Operator Station Server 2, einen Engineering Station Server 3, einen Engineering Station Client 4 und einen Operator Station Client 5. Der Operator Station Server 2, der Engineering Station Server 3, sowie der Engineering Station Client 4 und der Operator Station Client 5 sind über einen Terminalbus 6 miteinander und optional mit nicht dargestellten weiteren Komponenten des Leitsystems 1 wie einem Archivserver verbunden.

Ein Benutzer bzw. Operator kann zum Zwecke des Bedienens und Beobachtens über den Operator Station Client 5 mittels des Terminalbus 6 auf den Operator Station Server 2 zugreifen. Analog dazu kann ein Projekteur im Rahmen einer Projektierung der Automatisierung für die technische Anlage über den Engineering Station Client 4 auf den Engineering Station Server 3 zugreifen. Der Operator Station Client 5 und der Engineering Station Client 4 können auf verschiedenen Geräten oder auf einem einzigen Gerät realisiert sein. Der Terminalbus 6 kann, ohne sich darauf zu beschränken, beispielsweise als Industrial Ethernet ausgebildet sein.

Der Operator Station Server 2 weist eine Geräteschnittstelle 7 auf, die mit einem Anlagenbus 8 verbunden ist. Über diese Geräteschnittstelle 7 ist der Operator Station Server 2 mit einem Automatisierungsgerät 9 sowie mit weiteren Komponenten der verfahrenstechnischen Anlage wie Peripheriegeräten 10 verbunden und kann mit diesen kommunizieren. Der Anlagenbus 8 kann, ohne sich darauf zu beschränken, beispielsweise als Industrial Ethernet ausgebildet sein.

Auf dem Operator Station Server 2 sind weiterhin ein Visualisierungsdienst 11, ein Prozessabbild 12 und ein Konfigurationsspeicher 13 implementiert. Zu dem Visualisierungsdienst 11 gehört ein Alarmdienst 14, welcher einen Teildienst des Visualisierungsdienstes darstellt.

Der in dem Operator Station Server 2 integrierte Visualisierungsdienst 11 initiiert eine Übertragung von Visualisierungsinformationen an den Operator Station Client 5. Der Operator Station Client 5 ist dazu ausgebildet, eine Visualisierung, d.h. eine grafische Darbietung, insbesondere von Anlagenbildern, zum Bedienen und Beobachten der Prozessanlage darzustellen.

In dem Prozessabbild 12 ist jeweils eine Momentaufnahme der (Signal-)Zustände der verbundenen Geräte 10 und/oder Applikationen mit vorherbestimmten hinterlegt. Vorschriften zum strukturellen Aufbau des Prozessabbildes 12 entnimmt der Operator Station Server 2 dem Konfigurationsspeicher 13.

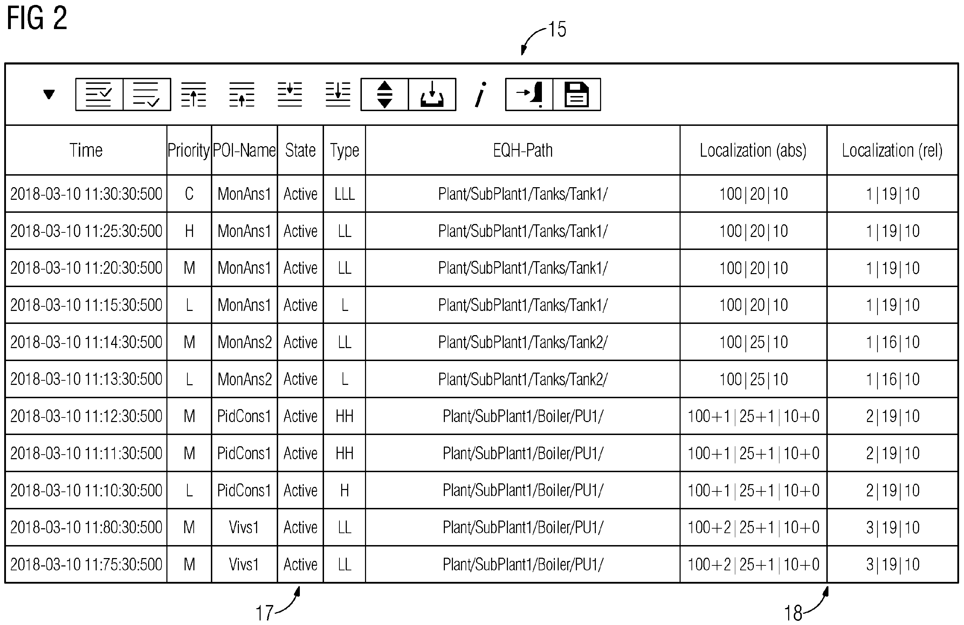

Der Alarmdienst 14 des Leitsystems 1 greift auf das Prozessabbild 12 zu und entnimmt diesem etwaige Alarmmeldungen. Diese werden wieder an den Operator Station Client 5 übertragen, um dem Operator die Alarmmeldungen visuell (und ggf. akustisch) in Form einer Alarmmeldeanzeige 15 (vgl. FIG 2) darzubieten.

In einer Projektierungsphase kann ein Projekteur durch Nutzung einer speziellen Entwurfsoberfläche 16a auf dem Engineering Station Client 4 bzw. einem dazugehörigen Entwurfsdienst 16b auf dem Engineering Station Server 3 unter anderem Alarme einzelnen Komponenten der technischen Anlage zuweisen. Dabei kann der Projekteur bei dem vorliegend beschriebenen Leitsystem 1 jedem Alarm eine Positionsinformation beigefügen, welche eine (initiale) Position der zu dem Alarm gehörigen Komponente angibt. Die erstellte Projektierung kann über eine an sich bekannte Ladefunktionalität in den Konfigurationsspeicher 13 des Operator Station Servers 2 übertragen werden.

Im Folgenden wird eine Ausprägung eines erfindungsgemäßen Verfahrens beschrieben:
Zunächst erfasst ein Operator, welcher zu einer alarmgebenden Komponente innerhalb der technischen Anlage navigiert werden möchte, ein Identifikationsmerkmal einer ersten Komponente. Dieses Identifikationsmerkmal wird an den Operator Station Server 2 des Leitsystems 1 der technischen Anlage übertragen.

Es wird der Fall angenommen, dass für die erste Komponente im Rahmen der Projektierung einer Automatisierung der technischen Anlage ein Alarm mit einer Lokalisierungsinformation der ersten Komponente zugewiesen und in dem Konfigurationsspeicher 13 entsprechend hinterlegt worden ist. Der Alarmdienst 14 des Visualisierungsdienstes 11 ermittelt eine zu einem aktuellen Zeitpunkt erste Position des Operators anhand der Lokalisierungsinformation, die dem Alarm zugewiesen worden ist. Den Alarm kann der Alarmdienst 14 dabei dem Prozessabbild 12 direkt (falls ein solcher Alarm gerade aktiv ist) oder dem Konfigurationsspeicher 13 entnehmen.

Der Operator hat über den Operator Station Client 5 die zweite, alarmgebende Komponente mit einem zu dem aktuellen Zeitpunkt aktiven Alarm als Ziel der Navigation vorgegeben. Der Operator Station Client 5 hat das Ziel wiederum an den Operator Station Server 2 übertragen. Der Alarmdienst 14 des Operator Station Servers 2 ermittelt eine zweiten Position der zweiten, alarmgebenden Komponente anhand einer Lokalisierungsinformation des zu dem aktuellen Zeitpunkt aktiven Alarms der zweiten, alarmgebenden Komponente durch eine Abfrage des aktiven Alarms aus dem Prozessabbild 12.

Daraufhin erzeugt der Alarmdienst 14 Navigationsinformationen durch Ermitteln einer Differenz zwischen der zweiten Position und der ersten Position, woraufhin eine visuelle Darbietung der Navigationsinformationen an den Operator durch den Operator Station Client 5 erfolgt, um eine Navigation des Operators zu der zweiten, alarmgebenden Komponente zu ermöglichen. Eine solche visuelle Darbietung der Navigationsinformationen ist beispielhaft in FIG 2 dargestellt. Die in FIG 2 zu erkennende Alarmmeldeanzeige 15, welche durch den Operator Station Client 5 dem Operator visuell dargeboten wird, umfasst eine Mehrzahl von Alarmmeldungen, die untereinander angeordnet sind. Auf der linken Seite 17 in FIG 2 sind dabei verschiedene zu den jeweiligen Alarmmeldungen gehörige Informationen (Zeitstempel, Priorität, Identifikation der dazugehörigen Komponente etc.) dargestellt. Auf der rechten Seite 18 in FIG 2 sind in einer ersten Spalte *"*Localization (abs)*"* die absoluten Lokalisierungsinformationen (in einem xyz-Format mit einer Länge x in Metern, einer Breite y in Metern und einer Höhe z in Metern) der jeweiligen Alarme aufgelistet. Mit anderen Worten ist hier angegeben, wo sich die zu den jeweiligen Alarmen gehörigen Komponenten innerhalb der technischen Anlage befinden. In einer zweiten Spalte *"*Localization (rel)*"* ist die Differenz der aktuellen Position des Operators zu der jeweiligen Position der Komponenten angegeben. Dadurch weiß der Operator, wie viele Meter er sich in welcher Raumrichtung bewegen muss, um zu der jeweiligen, alarmgebenden Komponente zu gelangen.

Der Operator erhält in diesem Fall die Navigationsinformationen in dem dargestellten xyz-Format. Es ist aber auch möglich, dass der Alarmdienst 14, ggf. unter Einbezug eines weiteren Dienstes, eine alternative Darstellungsform für die Navigation erzeugt (Pfeile, dreidimensionales Modell der technischen Anlage etc.).

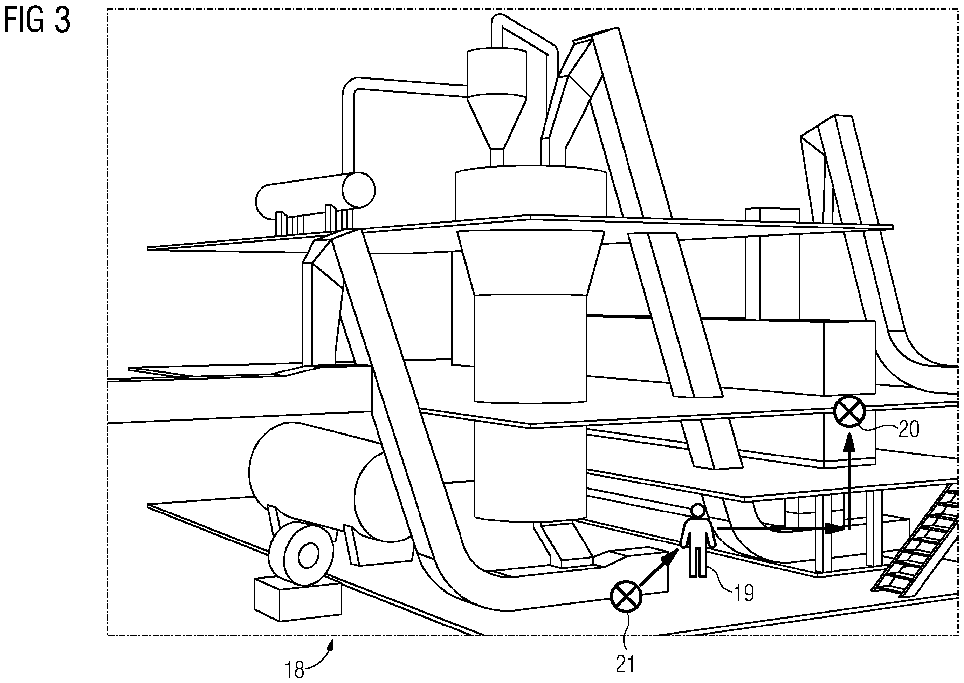

FIG 3 zeigt eine technische Anlage 18, innerhalb welcher ein Operator 19 zu einer alarmgebenden, zweiten Komponente 20 navigieren möchte. Ausgangspunkt für die Navigation ist eine erste Komponente 21, deren Identifikationsmerkmal (beispielsweise ein Anlagenkennzeichen) der Operator 19 erfasst. Darauf erhält er von dem Operator Station Server 2 über den Operator Station Client 5 die zuvor erläuterten Navigationsinformationen.

Bei modularen Anlagenteilen, die im Lebenszyklus einer verfahrenstechnischen Anlage oftmals ihre Position ändern, kann zur aktuellen Position des modularen Anlagenteils für die darin verbauten alarmfähigen Geräte noch ein *"*Offset*"* addiert werden, so dass der Operator auch innerhalb eines modularen Anlagenteils (Package Unit Container) navigieren kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Navigation eines Operators (19) innerhalb einer technischen Anlage (18), umfassend:
a) Erfassen eines Identifikationsmerkmals einer ersten Komponente (21) durch den Operator (19) und Übertragen des Identifikationsmerkmals an einen Operator Station Server (2) eines Leitsystems (1) der technischen Anlage (18),
b) Für den Fall, dass für die erste Komponente (21) im Rahmen einer Projektierung einer Automatisierung der technischen Anlage (18) ein Alarm mit einer Lokalisierungsinformation der ersten Komponente (21) zugewiesen worden ist, Ermitteln einer zu einem aktuellen Zeitpunkt ersten Position des Operators (19) anhand der Lokalisierungsinformation durch den Operator Station Server (2),
c) Vorgeben einer zweiten, alarmgebenden Komponente (20) mit einem zu dem aktuellen Zeitpunkt aktiven Alarm als Ziel der Navigation durch den Operator (19) und Übertragen des Ziels an den Operator Station Server (2),
d) Ermitteln einer zweiten Position der zweiten, alarmgebenden Komponente (20) anhand einer Lokalisierungsinformation des zu dem aktuellen Zeitpunkt aktiven Alarms der zweiten, alarmgebenden Komponente (20) durch den Operator Station Server (2),
e) Erzeugen von Navigationsinformationen durch Ermitteln einer Differenz zwischen der zweiten Position und der ersten Position durch den Operator Station Server (2),
f) Visuelle Darbietung der Navigationsinformationen an den Operator (19), um eine Navigation des Operators (19) zu der zweiten, alarmgebenden Komponente (20) zu ermöglichen.

2. Verfahren nach Anspruch 1, bei dem der Operator (19) während der Navigation zu der zweiten, alarmgebenden Komponente (20) ein Identifikationsmerkmal wenigstens einer dritten Komponente erfasst und die Schritte a bis f für wenigstens die dritte Komponente durchgeführt werden.

3. Verfahren nach Anspruch 1 oder 2, bei dem für das Erzeugen der Navigationsinformationen Informationen über eine Infrastruktur der technischen Anlage (18) hinzugezogen werden, insbesondere ein Rohrleitungs- und Instrumentierungsfließschema oder ein dreidimensionales Modell der technischen Anlage (18).

4. Verfahren nach einem der vorangegangenen Ansprüche, bei dem das Erfassen des Identifikationsmerkmals durch eine manuelle Eingabe durch den Operator (19) oder durch eine bildliche Erfassung, insbesondere eines Anlagenkennzeichens, vorgenommen wird, vorzugsweise unter Nutzung eines Smartphones, Tablets, Notebooks oder einer Datenbrille zur Darstellung einer erweiterten Realität.

5. Verfahren nach einem der vorangegangenen Ansprüche, bei dem das Übertragen des Identifikationsmerkmals an den Operator Station Server (2) des Leitsystems (1) drahtlos erfolgt.

6. Verfahren nach einem der vorangegangenen Ansprüche, bei dem die Lokalisierungsinformation der zweiten, alarmgebenden Komponente (20) im Rahmen einer Projektierung der Automatisierung der technischen Anlage (18) vorgegeben worden ist.

7. Verfahren nach Anspruch 6, bei dem die Lokalisierungsinformation vor dem aktuellen Zeitpunkt zur Laufzeit der technischen Anlage (18) im Rahmen eines Positionswechsels der zweiten, alarmgebenden Komponente (20) geändert worden ist.

8. Verfahren nach Anspruch 7, bei dem die zweite, alarmgebende Komponente (20) im Rahmen des Positionswechsels gegenüber einer Sicherheitsinstanz der technischen Anlage (18) einen positionsgebundenen Nachweis ihrer Identität erbringt, um sicherzustellen, dass die zweite, alarmgebende Komponente (20) sich auch tatsächlich an der neuen, zweiten Position befindet.

9. Leitsystem (1) für eine technische Anlage (18), insbesondere Fertigungs- oder Prozessanlage, welche technische Anlage wenigstens eine erste Komponente (21) und eine zweite Komponente (20) umfasst, wobei das Leitsystem (1) wenigstens einen Operator Station Server (2) umfasst, der dazu ausgebildet ist, ein Verfahren gemäß einem der vorangegangenen Ansprüche durchzuführen.

10. Leitsystem (1) nach Anspruch 9, welches zusätzlich wenigstens einen Operator Station Client (5) aufweist, welcher von dem Operator (19) für die Navigation verwendbar ist, wobei der Operator Station Server (2) dazu ausgebildet ist, Visualisierungsinformationen zu erzeugen und an den Operator Station Client (5) zu übertragen, welche Visualisierungsinformationen wenigstens den Alarm der zweiten, alarmgebenden Komponente (20) umfassen.

11. Technische Anlage (18), insbesondere Fertigungs- oder Prozessanlage, umfassend ein Leitsystem (1) nach einem der Ansprüche 9 oder 10 und wenigstens eine erste Komponente (21) und eine zweite Komponente (20), wobei die zweite Komponente (20) vorzugsweise eine Mehrzahl von Subkomponenten aufweist.

12. Technische Anlage (18) gemäß Anspruch 11, die eine Sicherheitsinstanz aufweist, insbesondere eine Zertifizierungsstelle im Rahmen einer Public-Private-Key Infrastruktur.

13. Verwendung eines Leitsystems (1) gemäß einem der Ansprüche 9 oder 10 zum Betrieb einer technischen Anlage (18), insbesondere Fertigungs- oder Prozessanlage.
